# EUROPEAN PATENT APPLICATION

(11) **EP 2 026 531 A1**
(43) Date of publication of application: **18.02.2009**
(21) Application number: 08700107.9
(22) Date of filing: 11.01.2008
(51) Int. Cl.: H04L 29/06

(54) **MESSAGE INFORMATION TRANSMITTING AND RECEIVING METHOD, DEVICE AND SYSTEM**

(30) Priority: 29.03.2007 CN 200710086999
(71) Applicant: Huawei Technologies Co., Ltd., Longgang District Shenzhen Guangdong 518129 (CN)
(72) Inventor: YUE, Peiyu, Shenzhen Guangdong 518129 (CN); SHI, Teng, Shenzhen Guangdong 518129 (CN); ZHANG, Jie, Shenzhen Guangdong 518129 (CN); CHEN, Li, Shenzhen Guangdong 518129 (CN); FU, Xin, Shenzhen Guangdong 518129 (CN)
(74) Representative: Thun, Clemens
(86) International application number: PCT/CN2008/070088
(87) International publication number: WO 2008/119268

(57) **Abstract**

A method, apparatus and system for sending and receiving notification messages to synchronize notification messages with program streams accurately. The method for sending notification messages includes: obtaining a notification message and a synchronization timestamp that are synchronous with a program; encapsulating the notification message into an RTP/RTCP packet corresponding to the synchronization timestamp; and sending the RTP/RTCP packet to a terminal. The method for decapsulating notification messages includes: receiving an RTP/RTCP packet that carries a notification message; and decapsulating the RTP/RTCP packet to obtain the notification message. Embodiments of the present invention synchronize a notification message with a program stream accurately by carrying the notification message in an RTP/RTCP packet.

## Description

### Field of the Invention

The present invention relates to a communication technology, and in particular, to a method, apparatus and system for sending and receiving notification messages.

### Background of the Invention

With the rapid development of the Internet, a great number of multimedia services are widely used, for example, mobile video, television broadcasting, videoconference, online education, and interactive games.

Currently, a lot of radio communication systems support applications of multimedia services, including: radio communication systems based on terrestrial broadcasting technologies, such as European digital video broadcasting-handheld (DVB-H) system, South Korean terrestrial-digital multimedia broadcasting (T-DMB) system and MediaFLO system launched by Qualcomm in USA; radio communication systems based on satellite broadcasting technologies, such as European satellite digital multimedia broadcasting (SDMB) system; the multimedia broadcast/multicast service (MBMS) technology, broadcast and multicast service (BCMCS) technology and streaming media technology that are based on the 3rd Generation Partnership Project (3GPP) standards.

The radio communication system includes: a server, adapted to generate and send Real-Time Transport Protocol/Real-Time Transport Control Protocol (RTP/RTCP) packets and notification messages; and a terminal, adapted to receive the RTP/RTCP packets and notification messages sent by the server, and process the RTP/RTCP packets according to the notification messages.

The notification messages are messages that operators send to a user or a terminal in a mobile broadcasting system when some events (including emergency event, system failure event, program description event and software update event) occur so as to notify the terminal of these events and allow the user terminal to handle these events. One type of notification message is related to a program. For example, when a user watches a program, such notification messages as bonus questions and answers or program related captions need to be synchronous with the program to reflect the meanings of the notification messages.

The notification message in the prior art adopts the XML text format, as shown in the table below:

| Parameter | Type | Description |
|---|---|---|
| NotificationMessage | E | a notification message, including various elements and properties. |
| ... | ... | ... |
| PresentationRule | E2 | a presentation rule, including properties such as rendenngtime and duration. |
| rendering Time | A | the presentation time. |
| Duration | A | the presentation duration. |

As seen from the above format of the notification message, there is a sub-element PresentationRule in the notification message, and PresentationRule includes a renderingTime (presentation time) property. However, the presentation time is an absolute time, and the program stream timestamp is a relative time. Thus, it is impossible to synchronize the notification message and the program stream accurately. Therefore, the notification message cannot be displayed in a program frame in the program stream, failing to present the actual contents. Supposing the notification message is the program caption, if the notification message cannot be displayed in the corresponding program frame, the notification message may fail to explain voices in the frame.

### Summary of the Invention

Embodiments of the present invention provide a method, apparatus and system for sending and receiving notification messages to synchronize notification messages with program streams accurately.

A method for sending notification messages provided in an embodiment of the present invention includes: obtaining the notification message and a synchronization timestamp that are synchronous with a program; encapsulating the notification message into an RTP/RTCP packet corresponding to the synchronization timestamp; and sending the RTP/RTCP packet to a terminal.

A method for receiving notification messages provided in an embodiment of the present invention includes: receiving an RTP/RTCP packet that includes the notification message; and decapsulating the RTP/RTCP packet to obtain the notification message.

A notification messages sending apparatus provided in an embodiment of the present invention includes: an obtaining module, adapted to obtain the notification message and a synchronization timestamp that are synchronous with a program; an RTP/RTCP packet encapsulating module, adapted to encapsulate the notification message into an RTP/RTCP packet corresponding to the synchronization timestamp obtained by the obtaining module; and a sending module, adapted to send the RTP/RTCP packet that is obtained by the RTP/RTCP packet encapsulating module.

A notification messages receiving apparatus provided in an embodiment of the present invention includes: a receiving module, adapted to receive an RTP/RTCP packet sent by a notification messages sending apparatus; and an RTP/RTCP packet decapsulating module, adapted to decapsulate the RTP/RTCP packet received by the receiving module to obtain the notification message, and process the notification message according to the format of the notification message.

A system for transmitting notification messages provided in an embodiment of the present invention includes: a message source entity, adapted to generate a notification message and a synchronization timestamp that are synchronous with a program, and send the notification message and the synchronization timestamp to a notification messages sending apparatus; and the notification messages sending apparatus, adapted to obtain the notification message and the synchronization timestamp synchronous with the program that are generated by the message source entity, encapsulate the notification message into an RTP/RTCP packet corresponding to the synchronization timestamp, and send the RTP/RTCP packet to a notification messages receiving apparatus.

According to the embodiments of the present invention, the notification message is synchronized with the program stream accurately by carrying the notification message in the RTP/RTCP packet.

### Brief Description of the Drawings

Figure 1 shows the process of transferring a notification message in an embodiment of the present invention;

Figure 2 shows the process of decapsulating an RTP/RTCP packet to obtain a notification message in a first embodiment of the present invention;

Figure 3 shows the process of decapsulating an RTP/RTCP packet to obtain a notification message in a second embodiment of the present invention;

Figure 4 shows the process of decapsulating an RTP/RTCP packet to obtain a notification message in a third embodiment of the present invention;

Figure 5 shows the process of decapsulating an RTP/RTCP packet to obtain a notification message in a fourth embodiment of the present invention; and

Figure 6 shows a system for transferring notification messages in a fifth embodiment of the present invention.

### Detailed Description of the Invention

For better understanding and implementation of the present invention, the present invention is hereinafter described in detail with reference to the accompanying drawing and exemplary embodiments.

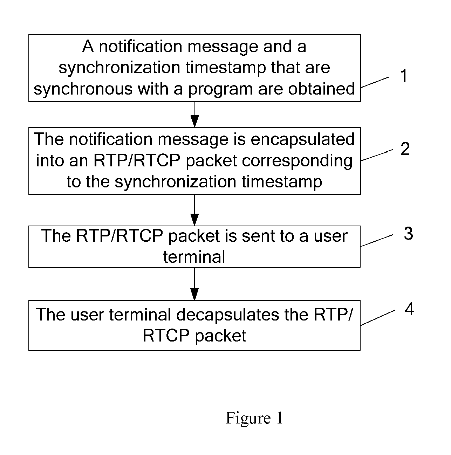

As shown in Figure 1, a method for sending notification messages provided in an embodiment of the present invention includes:

Step 1: A notification message and a synchronization timestamp that are synchronous with a program are obtained.

Step 2: The notification message is encapsulated into an RTP/RTCP packet corresponding to the synchronization timestamp.

Step 3: The RTP/RTCP packet is sent to a user terminal.

Step 4: The user terminal decapsulates the RTP/RTCP packet to obtain the notification message.

According to an embodiment of the present invention, before the notification message is encapsulated into an RTP/RTCP packet corresponding to the synchronization timestamp in step 2 and step 4, it is necessary to extend the format of the RTP/RTCP packet. The method for extending the format of the RTP/RTCP packet, the method for encapsulating the notification message into the RTP/RTCP packet, and the method for decapsulating the RTP/RTCP packet to obtain the notification message are described in the first embodiment to the fourth embodiment of the invention.

Embodiment 1

The first embodiment describes the method for extending the RTP packet header, the method for encapsulating a notification message into the RTP packet header, and the method for decapsulating the RTP packet header to obtain the notification message.

(1) Extending the RTP packet header

To transmit a notification message, it is necessary to set a notification message indication bit and determine a field for carrying the notification message in the RTP packet header. In the first embodiment, an extended field of the RTP packet header is extended. The extended field includes "defined by profile", "length", and "header extension". The "defined by profile" field is defined as a notification message indication field.

If the notification message indication field is valid (for example, it is set to 0xC051), there is a notification message in the RTP packet header; otherwise, there is no notification message in the RTP packet header. A header extension field is defined as a field for carrying a notification message. The figure below shows the format of the RTP packet header:

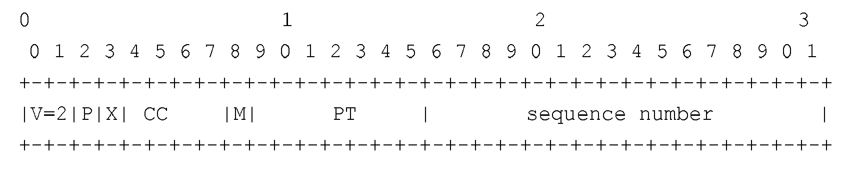

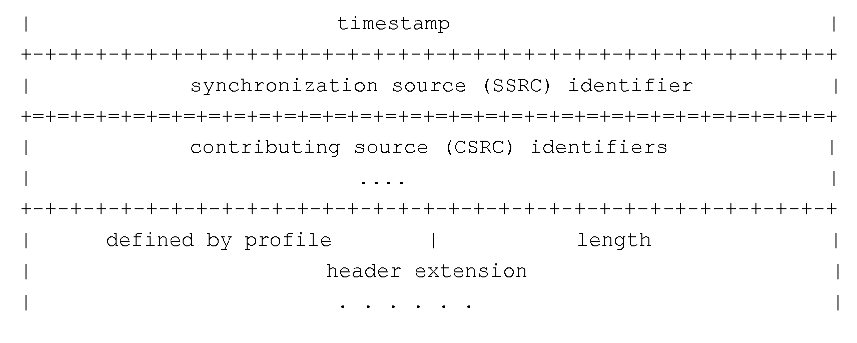

Wherein:
• V: version, 2 bits, indicating the version of the RTP protocol. The current RTP version is 2.
• P: padding, 1 bit. If P is set to 1, there is one or multiple padding bytes at the end of the payload. The last padding byte indicates the total number of padding bytes (including the last byte).
• X: extension, 1 bit. If X is set to 1, there must be only one header extension behind the fixed RTP header. See section 3.2 for the format of the header extension.
• CC: CSRC count, 4 bits, indicating the number of CSRCs of the stream. The number of CSRCs determines the size of the RTP packet header.
• M: marker, 1 bit. The meaning of the field varies with the profile, and depends on the profile. The profile may put the marker field in the payload rather than use the marker field.
• PT: payload type, 7 bits, indicating the format of the data carried in the RTP payload. The terminal parses the payload according to the PT.
• Sequence number: 16 bits, indicating the sequence of the RTP packet. In an RTP session, the sequence numbers of RTP packets are in the ascending order. The initial sequence number of the RTP packet must be random.
• Timestamp: timestamp, 32 bits, indicating the time when the first byte is sampled in the RTP packet. The terminal may recover the original media stream based on the timestamp. The timestamp may also be used to synchronize multiple media streams. See section 5.4 for the timestamp synchronization mechanism.
• SSRC: 32 bits, indicating a synchronization source.
• CSRC: 0 to 15 CSRCs, each equal to 32 bits and indicating the content source of a stream.
• defined by profile: notification message indication field. If this field is valid (for example, it is set to 0xC051), there is a notification message in the RTP packet header; otherwise, there is no notification message in the RTP packet header.
• Header extension: field for carrying a notification message.

Multiple notification messages may be set in the header extension, where each notification message carries the following parameters:

| Parameter | Value | Description |
|---|---|---|
| Notification message ID | 0x103A | the message ID. |
| Subtype | 0xXX | Identifies the relationship with a service. |
| privilege | 0x0001 | the notification message must be processed. |
| Version | 0x2 | the version of this notification message is 2, and is a revision of version 1. |
| compress type | 0x00 | this notification message is not compressed. |
| Length | 0x00C | the number of bytes is 12. |
| Valid to | 0x0000 | this notification message is always valid. |
| providerID | 0x0003 | the provider ID. |
| Noti message payload | "Voting begins" | the message contents. |

(2) Encapsulating the notification message into the RTP packet header

After the notification message indication field and the field for carrying the notification message are determined, the message source generates a notification message payload that is synchronous with a program according to the program contents, and determines such parameter information as synchronization timestamp, notification message ID, and notification message subtype. Then the message source encapsulates the notification message payload, notification message ID, and notification message subtype into the RTP packet header corresponding to the synchronization timestamp. The message source sends the RTP packet header and program to the terminal.

(3) Decapsulating the RTP packet header to obtain the notification message

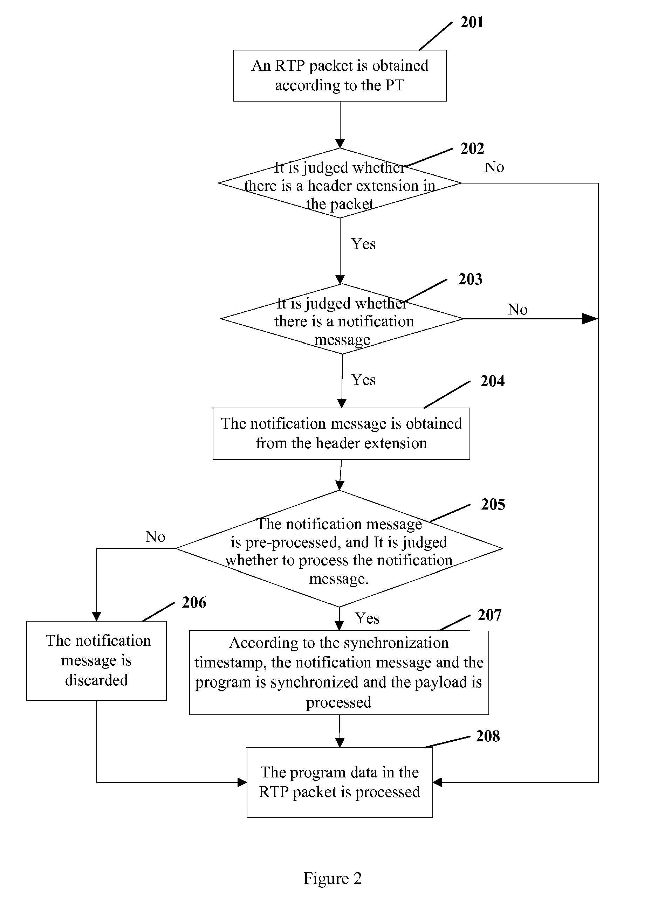

At the receiving side (taking the terminal as an example) of the RTP packet, the terminal listens to the IP address and port number where the RTP packet is sent so as to obtain the RTP packet, as shown in Figure 2. The following describes the process of decapsulating the RTP packet to obtain the notification message.

Step 201: The RTP packet is obtained according to the PT, that is, the terminal parses the RTP packet header and judges whether there is a header extension.

Step 202: It is judged whether there is a header extension. If there is, step 203 is performed; otherwise step 208 is performed.

In other words, the X field in the RTP packet header (see the description of the RTP packet header in this embodiment) is used to judge whether there is a header extension. If the X field is 1, there is a header extension. If the X field is 0, there is no header extension.

Step 203: It is judged whether there is a notification message according to the "defined by profile" field of the header extension. If so, step 204 is performed; otherwise step 208 is performed.

In other words, if the notification message indication field indicates that there is a notification message (for example, it is set to 0xC051), there is a notification message in the RTP packet header; otherwise, there is no notification message in the RTP packet header.

Step 204: The notification message is obtained from the header extension of the RTP packet.

Step 205: The terminal pre-processes each notification message according to the defined format of the message, and judges whether to process the notification message according to the pre-processing result. If so, it goes to step 207; otherwise it goes to step 206.The pre-processing includes: determining whether the notification message has been received according to the ID of the notification message; judging whether to receive the notification message according to the subtype of the notification message; determining whether to process the notification message immediately according to the priority of the notification message; judging whether to update the existing messages according to the version of the message; judging whether the message has expired according to the Valid to date; and judging whether the user is concerned about the notification message and whether to process the notification message according to the provider ID of the notification message.

Step 206: This notification message is discarded and step 208 is performed.

Step 207: The terminal decompresses the payload of the length indicated by the Length field according to the compression type of the notification message. The terminal synchronizes the notification message with the program according to the synchronization timestamp, and processes the decompressed payload contents.

Step 208: The program data in the RTP packet is processed.

According to this embodiment, the notification message and the program stream are synchronized accurately by setting the notification message in the header extension of the RTP packet that is synchronous with the synchronization timestamp. Because the notification message and the program stream adopt the same RTP packet, the terminal needs to listen to the address and port number where the program is located only.

Embodiment 2

This embodiment describes the method for extending an RTCP sender report (RTP SR) packet, the method for encapsulating a notification message into the RTP SR packet, and the method for decapsulating the RTP SR packet to obtain the notification message.

(1) Extending the RTCP SR packet

The figure below shows the structure of the RTCP SR packet:

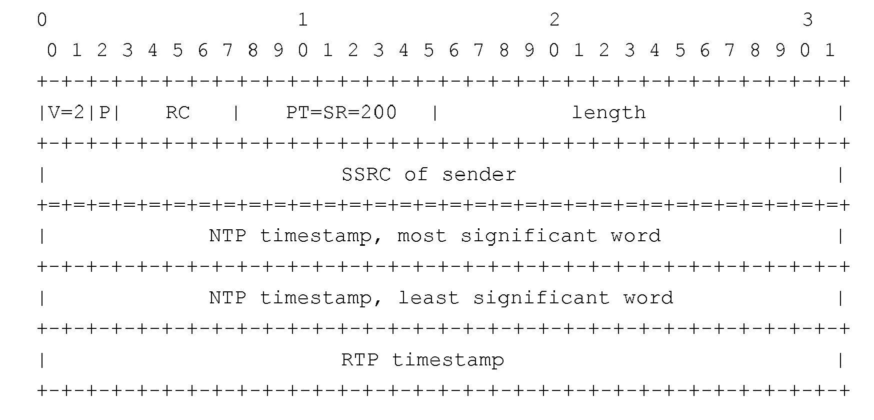

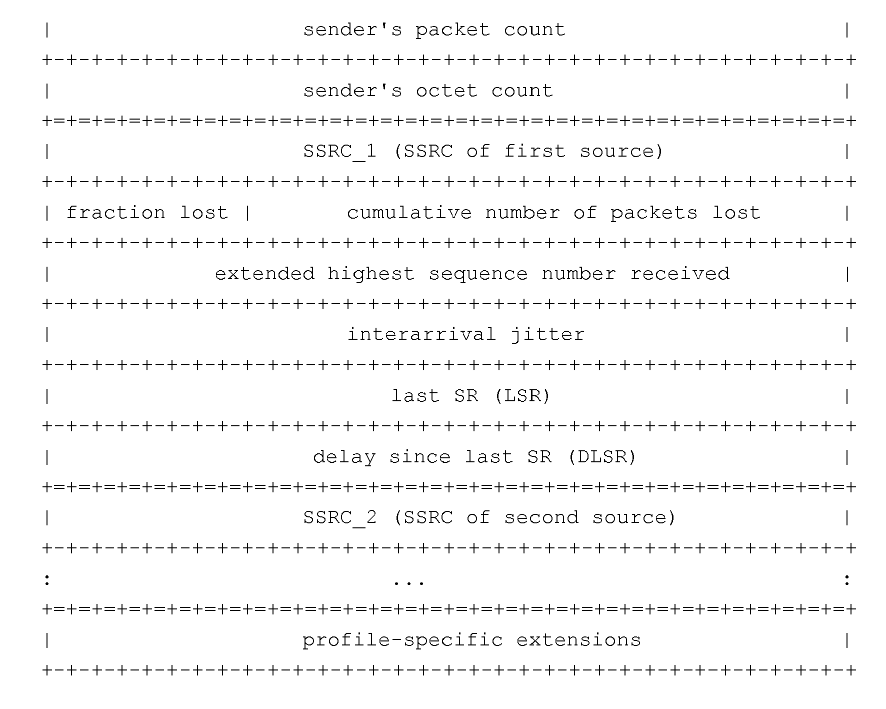

In the Header part:
• V: version. The value is equal to 2.
• P: padding, the same as that in the RTP packet.
• RC: reception report count, indicating the number of reception reports.
• PT: pack type. If the value is 200, the packet type is RTCP SR packet.
• Sender information: sender information.
• SSRC of sender: SSRC value of the sender who sends the report.
• NTP timestamp: NTP sampling time when the report is sent.
• RTP timestamp: RTP sampling time when the report is sent. The RTP sampling time is the same as that in the RTP session.
• Sender's packet count: total number of RTP packets that the sender sends during the NTP time. If the SSRC of the sender changes, this value needs to be reset.
• Sender's octet count: total number of bytes carried by all the RTP packets that the sender sends during the NTP time. If the SSRC of the sender changes, this value needs to be reset.
• profile-specific extensions: type-specific extensions. The RTP/RTCP protocol specifies that this field is defined by the profile.

The profile-specific extensions field is extended to transfer the notification message. It includes the following parameters:

| Parameter | Description |
|---|---|
| type | the type of the information carried in the extension. The type needs to be identified as notification message. |
| Notification message ID | the ID of the notification message. |
| Subtype | the subtype of the notification message, adapted to filter the notification message. |
| Privilege | the priority of the notification message. If this parameter is set to 0x01, the notification message must be processed; if this parameter is set to 0x02, the notification message may not be processed. |
| Version | the version information of the message. |
| compress type | the compression type of the notification message. If this parameter is set to 0x00, the notification message is not compressed; if this parameter is set to 0x01, the notification message is compressed in the Bim format; if this parameter is set to 0x02, the notification message is compressed in the Gzip format. |
| Length | the byte length of the payload of the notification message. |
| Valid to | the end time of the valid time segment of the notification message. This parameter uses the RTP timestamp. If the parameter is set to 0x0000, no valid time is available. |
| providerID | the provider ID of the notification message. |
| Notification message payload | the content of the notification message. |

The type parameter indicates whether a notification message is carried in the profile-specific extensions field. That is, if the type parameter is valid (for example, it is set to 0x0001), there is a notification message in the profile-specific extensions field; otherwise, there is no notification message in the profile-specific extensions field. The contents of other fields are parameters and contents of the notification message. The table below shows the specific contents of the profile-specific extensions field:

| Parameter | Value | Description |
|---|---|---|
| type | 0x0001 | Indicates the notification message is carried in the profile-specific extensions field. |
| Notification message ID | 0x103A | the message ID. |
| Subtype | 0xXX | Identifies the relationship with a service. |
| privilege | 0x0001 | the notification message must be processed. |
| Version | 0x2 | that the version of this notification message is 2, and is a revision of version 1. |
| compress type | 0x00 | this notification message is not compressed. |
| Length | 0x00C | the number of bytes is 12. |
| Valid to | 0x0000 | this notification message is always valid. |
| providerID | 0x0003 | the provider ID. |
| Noti message payload | "Voting begins" | the message contents. |

(2) Encapsulating the notification message into the RTP SR packet

After the extension format of the profile-specific extensions field is determined, when a notification message is generated, the notification message may be encapsulated into the RTCP SR packet according to the following method:

The message source generates a notification message payload that is synchronous with the program according to the program contents, and determines such parameter information as synchronization timestamp, notification message ID, and notification message subtype.

Then the message source encapsulates the notification message payload, notification message ID and notification message subtype into the profile-specific extensions field of the RTCP SR packet corresponding to the synchronization timestamp.

(3) Decapsulating the RTCP SR packet to obtain the notification message

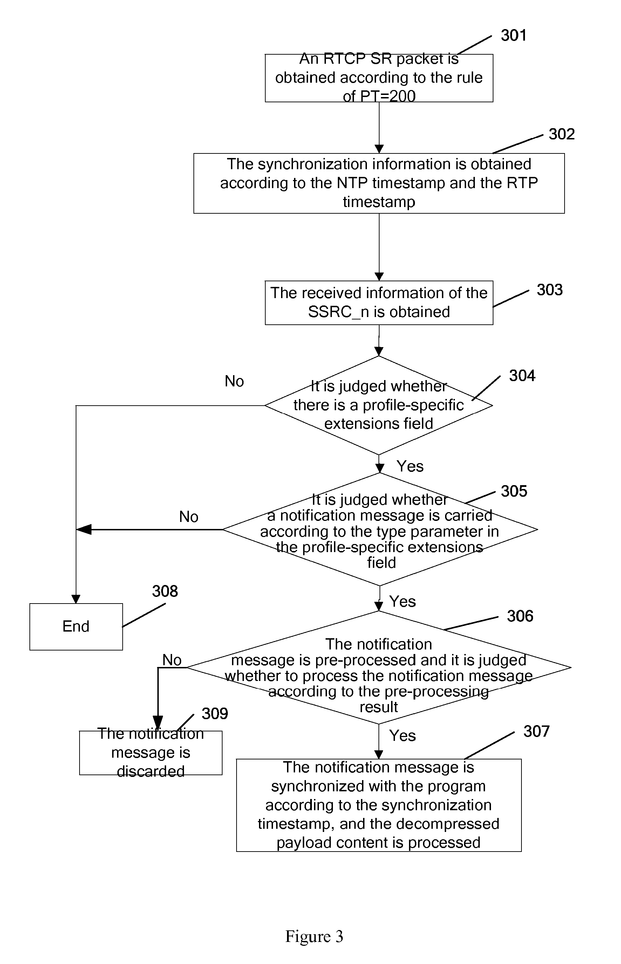

At the receiving side (taking the terminal as an example) of the RTP SR packet, the terminal accesses the RTCP SR packet to obtain the notification message, as shown in Figure 3. The following describes the process of decapsulating the RTCP SR packet to obtain the notification message.

Step 301: The terminal receives an RTCP session, and filters the RTCP packet according to the rule of PT=200 to obtain the RTCP SR packet.

Step 302: The information that is synchronous with the RTP carrying the program stream is obtained according to the NTP timestamp and the RTP timestamp.

Step 303: The received information of the program source SSRC_n is obtained.

Step 304: The terminal judges whether there is a profile-specific extensions field in the RTCP SR packet according to the fact about whether the length exceeds a preset value. If there is, step 305 is performed; otherwise step 308 is performed

Step 305: The terminal judges whether the profile-specific extensions field carries a notification message according to the type parameter in the profile-specific extensions field. If so, step 306 is performed; otherwise step 308 is performed.

Step 306: The terminal pre-processes the notification message according to the format of the profile-specific extensions field, and judges whether to process the notification message according to the pre-processing result. If so, step 307 is performed; otherwise step 309 is performed. The pre-processing includes: determining whether the notification message has been received according to the ID of the notification message; judging whether to receive the notification message according to the subtype of the notification message; determining whether to process the notification message immediately according to the priority of the notification message; judging whether to update the existing messages according to the version of the message; judging whether the message has expired according to the Valid to date; and judging whether the user is concerned about the notification message and whether to process the notification message according to the provider ID of the notification message.

Step 307: If the notification message needs to be processed, the terminal decompresses the payload of the length indicated by the Length field according to the compression type of the notification message. The terminal synchronizes the notification message with the program according to the synchronization timestamp, and processes the decompressed payload contents.

Step 308: This process ends.

Step 309: The notification message is discarded.

In this embodiment, when a notification message is generated, the notification message (see the notification message in Table 3) is set in the profile-specific extensions field. After receiving the notification message, the terminal processes the notification message according to each parameter. If judgment shows that the notification message must be processed, the information "Voting begins" may be displayed on the user terminal at the time when the program is played.

This embodiment can synchronize the notification message with the program stream accurately by carrying the notification message in the RTCP SR packet. Because the RTCP SR packet and the program stream adopt the same IP address, the terminal does not need to listen to additional IP addresses despite different port numbers used.

Embodiment 3

This embodiment describes the method for extending another RTCP packet, namely, application-defined RTCP packet, the method for encapsulating a notification message into the application-defined RTCP packet, and the method for decapsulating the application-defined RTCP packet to obtain the notification message.

(1) Extending the application-defined RTCP packet

The figure below shows the format of the application-defined RTCP packet:

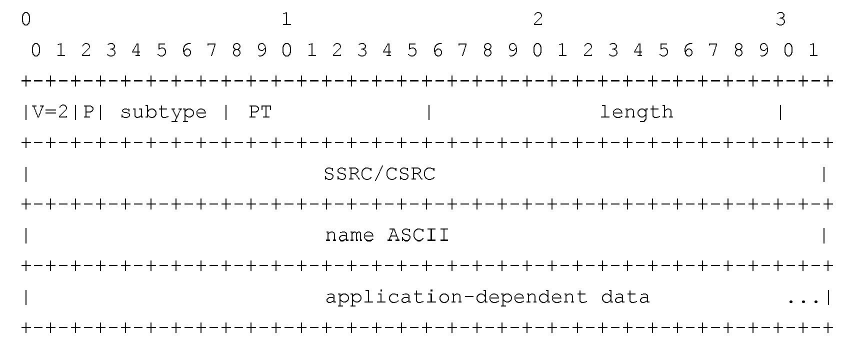

In the preceding format:

PT: indicating whether an RTCP packet is an application-defined RTCP packet according to the value of PT (for example, PT=204).

Name ASCII: indicating whether a notification message is transmitted in the application-dependent data according to the value of name ASCII (for example, Noti).

Application-dependent data: adapted to transmitted the notification message.

To transmit a general notification message, it is necessary to extend the application-dependent data field. The format of the extended application-dependent data field includes the following parameters:

| Parameter | Description |
|---|---|
| Timestamp | the synchronization timestamp, adapted to synchronize the notification message with the program. |
| Notification message ID | the ID of the notification message. |
| Subtype | the subtype of the notification message, adapted to filter the notification message. |
| Privilege | the priority of the notification message. If this parameter is set to 0x01, the notification message must be processed; if this parameter is set to 0x02, the notification message may not be processed. |
| Version | the version information of the message. |
| compress type | the compression type of the notification message. If this parameter is set to 0x00, the notification message is not compressed; if this parameter is set to 0x01, the notification message is compressed in the Bim format; if this parameter is set to 0x02, the notification message is compressed in the Gzip format. |
| Length | the byte length of the payload of the notification message. |
| Valid to | the end time of the valid time segment of the notification message. This parameter uses the RTP timestamp. If the parameter is set to 0x0000, no valid time is available. |
| providerID | the provider ID of the notification message. |
| Notification message payload | the content of the notification message. |

(2) Encapsulating the notification message into the application-defined RTCP packet

After the extension format of the application-dependent data field is determined, when a notification message is generated, the message source generates a notification message payload that is synchronous with the program according to the program contents, and determines such parameter information as synchronization timestamp, notification message ID, and notification message subtype, and encapsulates the notification message payload, notification message ID, and notification message subtype into the RTCP packet corresponding to the synchronization timestamp.

(3) Decapsulating the application-defined RTCP packet to obtain the notification message

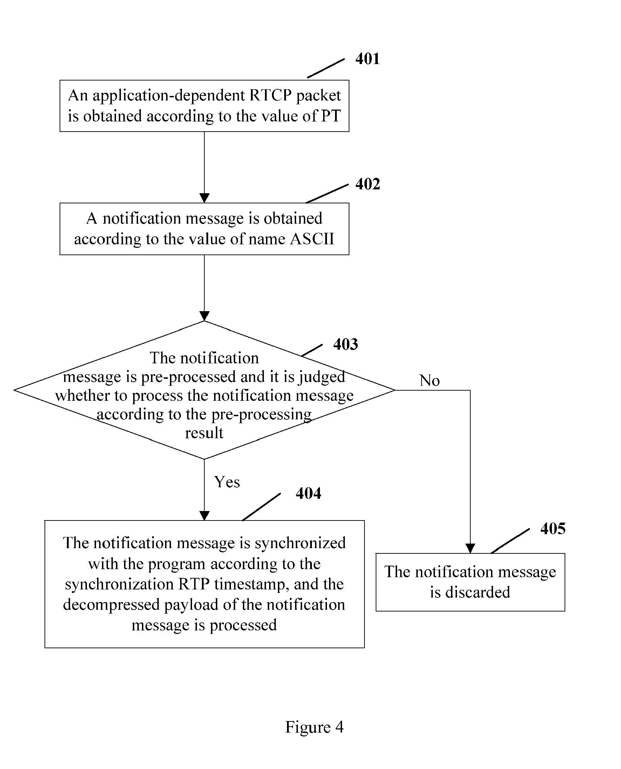

At the receiving side (taking the terminal as an example) of the RTCP packet, the terminal obtains the notification message according to the obtained application-defined RTCP packet, as shown in Figure 4. The following describes the process of decapsulating the application-defined RTCP packet to obtain the notification message.

Step 401: The terminal receives an RTCP session, and obtains the application-defined RTCP packet according to the value of PT (for example, PT=204).

Step 402: The notification message is obtained according to the value of name ASCII (for example, Noti).

Step 403: The notification message is pre-processed, and whether to process the notification message is judged according to the pre-processing result. If so, step 404 is performed; otherwise, step 405 is performed. The pre-processing includes: determining whether the notification message has been received according to the ID of the notification message; judging whether to receive the notification message according to the subtype of the notification message; determining whether to process the notification message immediately according to the priority of the notification message; judging whether to update the existing messages according to the version of the message; judging whether the message has expired according to the Valid to date; and judging whether the user is concerned about the notification message and whether to process the notification message according to the provider ID of the notification message.

Step 404: The terminal decompresses the payload of the length indicated by the Length field according to the compression type of the notification message. The terminal synchronizes the notification message with the program according to the synchronization timestamp, and processes the decompressed payload contents.

Step 405: The notification message is discarded.

This embodiment can synchronize the notification message with the program stream accurately by carrying the notification message in an application-dependent RTCP packet. Because the RTCP packet and the program stream adopt the same IP address, the terminal does not need to listen to additional IP addresses despite different port numbers used.

Embodiment 4

This embodiment describes the method for extending another RTP packet, the method for encapsulating a notification message into the RTP packet, and the method for decapsulating the RTP packet to obtain the notification message.

(1) Extending the RTP packet

The figure below shows the format of the RTP packet:

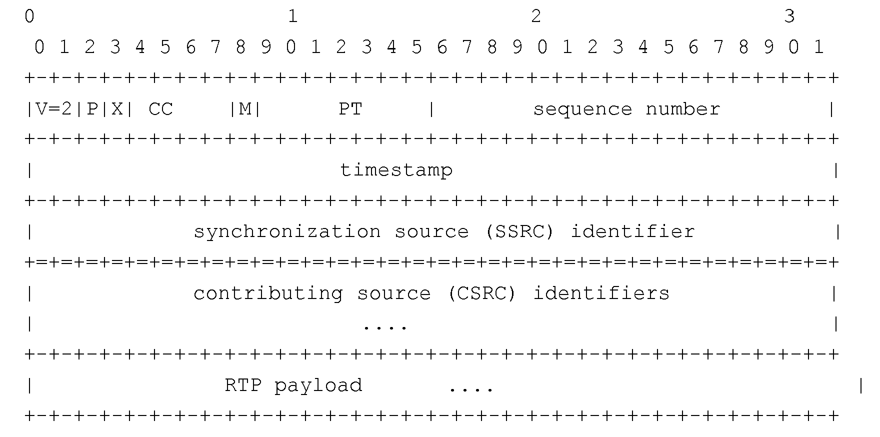

In the preceding RTP format:

PT: indicating that a notification message is carried in the RTP payload according to the value of PT (for example, PT=255).

RTP payload: adapted to carry a notification message. The RTP payload may include multiple notification messages, where each notification message carries the following parameters:

| Parameter | Description |
|---|---|
| Notification message ID | the ID of the notification message. |
| Subtype | the subtype of the notification message, adapted to filter the notification message. |
| Privilege | the priority of the notification message. If this parameter is set to 0x01, the notification message must be processed; if this parameter is set to 0x02, the notification message may not be processed. |
| Version | the version information of the message. |
| compress type | the compression type of the notification message. If this parameter is set to 0x00, the notification message is not compressed; if this parameter is set to 0x01, the notification message is compressed in the Bim format; if this parameter is set to 0x02, the notification message is compressed in the Gzip format. |
| Length | the byte length of the payload of the notification message. |
| Valid to | the end time of the valid time segment of the notification message. This parameter uses the RTP timestamp. If the parameter is set to 0x0000, no valid time is available. |
| providerID | the provider ID of the notification message. |
| Notification message payload | the content of the notification message. |

(2) Encapsulating the notification message into the RTP packet

After the format of the RTP packet is determined, that is, the formats of the PT and the RTP payload are determined, the message source generates a notification message payload that is synchronous with the program according to the program contents, determines such parameter information as synchronization timestamp, notification message ID, and notification message subtype, and encapsulates the notification message payload, notification message ID and notification message subtype into the RTP packet corresponding to the synchronization timestamp.

(3) Decapsulating the RTP packet to obtain the notification message

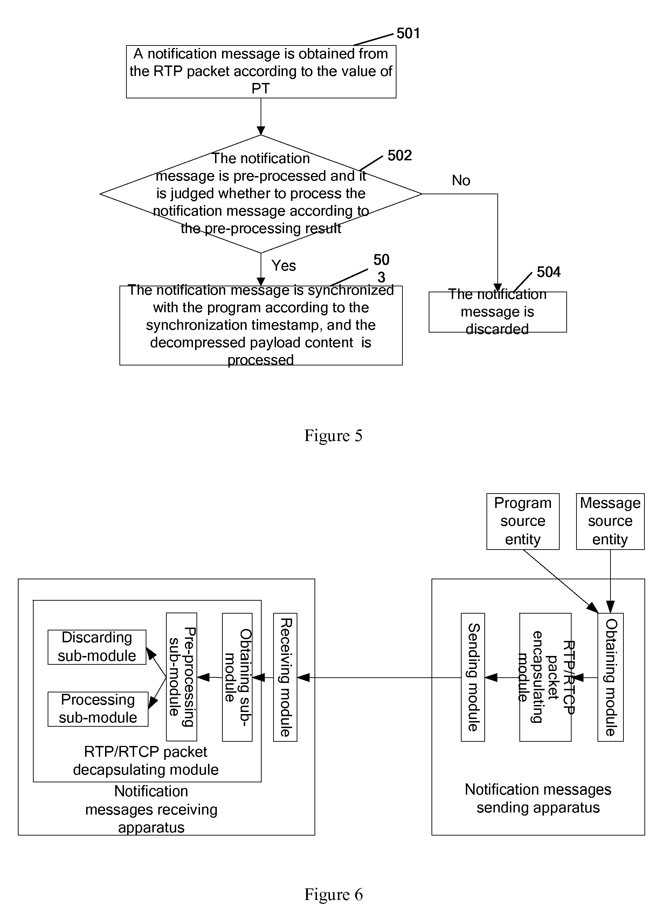

At the receiving side (taking the terminal as an example) of the RTP packet, the terminal obtains the notification message according to the obtained RTP packet, as shown in Figure 5. The following describes the process of decapsulating the RTP packet to obtain the notification message.

Step 501: The terminal receives an RTP session, and obtains an RTP packet that transfers the notification message according to the value of PT.

Step 502: The terminal pre-processes the notification message, and judges whether to process the notification message according to the pre-processing result. If so, it goes to step 503; otherwise, it goes to step 504. The pre-processing includes: determining whether the notification message has been received according to the ID of the notification message; judging whether to receive the notification message according to the subtype of the notification message; determining whether to process the notification message immediately according to the priority of the notification message; judging whether to update the existing messages according to the version of the message; judging whether the message has expired according to the Valid to date; and judging whether the user is concerned about the notification message and whether to process the notification message according to the provider ID of the notification message.

Step 503: The terminal decompresses the payload of the length indicated by the Length field according to the compression type of the notification message. The terminal synchronizes the notification message with the program according to the synchronization timestamp, and processes the decompressed RTP payload contents.

Step 504: The notification message is discarded.

According to this embodiment, the notification message may be synchronized with the program stream accurately by carrying the notification message in an RTP packet.

Embodiment 5

Figure 6 shows a system for transferring notification messages provided in the fifth embodiment of the present invention.

The system includes: a program source entity, adapted to generate a program; a message source entity corresponding to the program source entity, adapted to generate a notification message and a synchronization timestamp that are synchronous with the program; a notification messages sending apparatus, adapted to obtain the notification message and the synchronization timestamp synchronous with the program, encapsulate the notification message into an RTP/RTCP packet corresponding to the synchronization timestamp, and send the RTP/RTCP packet to a notification messages receiving apparatus; and the notification messages receiving apparatus, adapted to receive the RTP/RTCP packet sent by the notification messages sending apparatus, obtain a notification message from the RTP/RTCP packet, and process the notification message.

The notification messages sending apparatus includes: an obtaining module, adapted to obtain a notification message and a synchronization timestamp that are synchronous with the program; an RTP/RTCP packet encapsulating module, adapted to encapsulate the notification message into an RTP/RTCP packet corresponding to the synchronization timestamp obtained by the obtaining module; and a sending module, adapted to send the RTP/RTCP packet obtained by the RTP/RTCP packet encapsulating module to the notification messages receiving apparatus.

The notification messages receiving apparatus includes: a receiving module, adapted to receive the RTP/RTCP packet from the notification messages sending apparatus; and an RTP/RTCP packet decapsulating module, adapted to decapsulate the RTP/RTCP packet received by the receiving module to obtain the notification message, and process the notification message according to the format of the notification message. The RTP/RTCP packet decapsulating module includes: an obtaining sub-module, adapted to decapsulate the RTP/RTCP packet received by the receiving module to obtain the notification message; a pre-processing sub-module, adapted to pre-process the notification message obtained by the obtaining sub-module, and start a processing sub-module or a discarding sub-module according to the pre-processing result; the processing sub-module, adapted to process the notification message; and the discarding sub-module, adapted to discard the notification message.

According to the embodiments of the present invention, the notification message is synchronized with the program stream accurately by carrying the notification message in the RTP/RTCP packet.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for sending notification messages, comprising:
obtaining the notification message and a synchronization timestamp that are synchronous with a program;
encapsulating the notification message into a Real-Time Transport Protocol/Real-Time Transport Control Protocol (RTP/RTCP) packet corresponding to the synchronization timestamp; and
sending the RTP/RTCP packet to a terminal.

2. The method of claim 1, wherein the process of encapsulating the notification message into the RTP/RTCP packet corresponding to the synchronization timestamp comprises: setting a "defined by profile" field in a header extension of the RTP packet to indicate that there is a notification message, and setting the notification message in an extended header field in the header extension of the RTP packet.

3. The method of claim 1, wherein the process of encapsulating the notification message into the RTP/RTCP packet corresponding to the synchronization timestamp comprises: setting a notification message indication field in a profile-specific extensions field in an RTCP sender report packet to indicate that there is a notification message, and setting the notification message in a notification message field in the profile-specific extensions field.

4. The method of claim 1, wherein the process of encapsulating the notification message into the RTP/RTCP packet corresponding to the synchronization timestamp comprises: setting a name ASCII field in an application-defined RTCP packet to indicate that there is a notification message, and setting the notification message in an application-dependent data field in the application-defined RTCP packet.

5. The method of claim 1, wherein the process of encapsulating the notification message into an RTP/RTCP packet corresponding to the synchronization timestamp comprises: setting a payload type field in the RTP packet to indicate that there is a notification message, and setting the notification message in an RTP payload field in the RTP packet.

6. A method for receiving notification messages, comprising:
receiving a Real-Time Transport Protocol/Real-Time Transport Control Protocol (RTP/RTCP) packet carrying the notification message; and
decapsulating the RTP/RTCP packet to obtain the notification message.

7. The method of claim 6, wherein a "defined by profile" field in a header extension of the RTP packet indicates that there is a notification message, and the process of decapsulating the RTP/RTCP packet to obtain the notification message comprises:
obtaining the notification message from an extended header field in the header extension of the RTP packet.

8. The method of claim 6, wherein the RTCP packet is an RTCP sender report packet, and a notification message indication bit of the profile-specific extensions field in the RTCP sender report packet indicates that there is a notification message, and the process of decapsulating the RTP/RTCP packet to obtain the notification message comprises:
obtaining the notification message from the profile-specific extensions field in the RTCP sender report packet.

9. The method of claim 6, wherein the RTCP packet is an application-defined RTCP packet and a name ASCII field in the application-defined RTCP packet indicates that there is a notification message, and the process of decapsulating the RTP/RTCP packet to obtain the notification message comprises:
obtaining the notification message from an application-dependent data field in the application-defined RTCP packet.

10. The method of claim 6, wherein a payload type field in the RTP packet indicates that there is a notification message, and the process of decapsulating the RTP/RTCP packet to obtain the notification message comprises:
obtaining the notification message from an RTP payload field in the RTP packet.

11. An apparatus for sending notification messages, comprising:
an obtaining module, adapted to obtain the notification message and a synchronization timestamp that are synchronous with a program;
an RTP/RTCP packet encapsulating module, adapted to encapsulate the notification message into a Real-Time Transport Protocol/Real-Time Transport Control Protocol (RTP/RTCP) packet corresponding to the synchronization timestamp obtained by the obtaining module; and
a sending module, adapted to send the RTP/RTCP packet obtained by the RTP/RTCP packet encapsulating module.

12. An apparatus for receiving notification messages, comprising:
a receiving module, adapted to receive a Real-Time Transport Protocol/Real-Time Transport Control Protocol (RTP/RTCP) packet sent by a notification messages sending apparatus; and
an RTP/RTCP packet decapsulating module, adapted to decapsulate the RTP/RTCP packet received by the receiving module to obtain the notification message, and process the notification message according to the format of the notification message.

13. The apparatus of claim 12, wherein the RTP/RTCP packet decapsulating module comprises :
an obtaining sub-module, adapted to decapsulate the RTP/RTCP packet received by the receiving module to obtain the notification message;
a pre-processing sub-module, adapted to pre-process the notification message obtained by the obtaining sub-module, and start a processing sub-module or a discarding sub-module according to the pre-processing result;
the processing sub-module, adapted to process the notification message; and
the discarding sub-module, adapted to discard the notification message.

14. A system for sending notification messages, comprising:
a message source entity, adapted to generate a notification message and a synchronization timestamp that are synchronous with a program, and send the notification message and the synchronization timestamp to a notification messages sending apparatus; and
the notification messages sending apparatus, adapted to obtain the notification message and the synchronization timestamp synchronous with the program that are generated by the message source entity, encapsulate the notification message into a Real-Time Transport Protocol/Real-Time Transport Control Protocol (RTP/RTCP) packet corresponding to the synchronization timestamp, and send the RTP/RTCP packet to a notification messages receiving apparatus.

15. The system of claim 14, further comprising: a program source entity, adapted to generate a program and send the program to a notification messages encapsulating apparatus.
